# EUROPÄISCHE PATENTSCHRIFT

(11) **EP 0 502 371 B1**
(45) Veröffentlichungstag und Bekanntmachung des Hinweises auf die Patenterteilung: **16.08.1995**
(21) Anmeldenummer: 92102889.0
(22) Anmeldetag: 21.02.1992
(51) Int. Cl.: B01L 3/00, B01D 29/00, B01D 61/18, B01L 11/00

(54) **Absaugvorrichtung für Membranmikrotiterplatten**
Suction device for membrane microtiter plates
Dispositif d'aspiration pour plaques de microtitration à membranes

(30) Priorität: 07.03.1991 DE 4107262
(43) Veröffentlichungstag der Anmeldung: 09.09.1992
(73) Patentinhaber: EPPENDORF-NETHELER-HINZ GMBH, D-22339 Hamburg (DE)
(72) Erfinder: Lurz, Werner, Dr. Ing., W-2358 Kaltenkirchen (DE)
(74) Vertreter: Patentanwälte Hauck, Graalfs, Wehnert, Döring, Siemons

(56) Entgegenhaltungen:
- WO-A-91/02073
- WO-A-91/11245
- US-A- 4 427 415
- US-A- 4 902 481

## Beschreibung

Gegenstand der Erfindung ist eine Absaugvorrichtung für Membranmikrotiterplatten, mit einer evakuierbaren Kammer, die oben eine Öffnung mit etwa horizontal umlaufender Dichtfläche für ein randseitiges Abstützen einer von oben aufsetzbaren Membranmikrotiterplatte hat und zusätzlich für das Einsetzen und Entnehmen einer Mikrotiterplattenvorlage geöffnet werden kann, sowie mit einer Abstützung für ein Positionieren der Mikrotiterplattenvorlage in der Kammer unterhalb der Membranmikrotiterplatte und parallel dazu.

Der DE-A-34 25 762 ist bereits eine biochemische Mehrzweck-Testplattenvorrichtung entnehmbar, bei der eine Membranmikrotiterplatte von einer oberen Schablone mit einer Vielzahl von diskreten Löchern und einem unter der Schablone liegenden durchgehenden mikroporösen Film gebildet wird. Obere Schablone und mikroporöser Film werden unter Zwischenlage einer gelöcherten Dichtung sowie einer unteren Schablone seitlich abgedichtet gegen eine Basisplatte gepreßt, die mit einer zentralen und evakuierbaren Vertiefung eine Mikrotiterplattenvorlage bildet. Anwendungen der Kombination aus Membranmikrotiterplatte und Mikrotiterplattenvorlage sind in der Beschreibungseinleitung angegeben. Die Membran kann insbesondere eine Filterfunktion für eingebrachte Flüssigkeitsproben haben oder selektiv mit Komponenten der Proben reagieren. Die Handhabung der Testplattenvorrichtung ist jedoch sehr aufwendig, weil sie für jeden Test aus vielen Teilen zusammengesetzt werden muß. Ungeeignet ist die Vorrichtung für Anwendungsfälle, in denen z.B. für eine Mehrstufenreaktion die Mikrotiterplattenvorlage ausgewechselt werden muß. Dafür sind als Anwendungsbeispiele immunologische Tests zu nennen, bei denen die interessierenden Antigene der Testlösungen in einem ersten Schritt an einer Antikörper-Membran gebunden und in einem zweiten Schritt mit einem Farbreagenz durch diese Membran hindurch in eine Mikrotiterplattenvorlage mit Glasboden für eine fotometrische Messung abgesaugt werden. Ferner kann ein Vorlagenaustausch bei der Gewinnung reiner DNA erfolgen, wobei zunächst DNA z.B. an einer Glasmembran angelagert und sodann mittels einer speziellen Lösung in die Mikrotiterplattenvorlage abgesaugt wird.

Eine verbesserte Anwendungsbreite haben Membranmikrotiterplatten mit einteilig ausgebildeter Membran zum Verschließen der Aufnahmen für Flüssigkeitsproben, wobei zum Unterdrücken von Quervermischungen jeder Aufnahme eine Membran zugeordnet sein kann, die von Membranen benachbarter Aufnahmen separiert ist. Derartige Membranmikrotiterplatten haben üblicherweise 24, 48 oder 96 Aufnahmen und wirken mit einer schalenförmigen oder einer entsprechenden Anzahl von Aufnahmen aufweisenden Mikrotiterplattenvorlage zusammen. Die Erfindung betrifft vor allem eine Absaugvorrichtung für solche Membranmikrotiterplatten und Mikrotiterplattenvorlagen, die zum Austausch der Vorlagen relativ einfach gehandhabt werden können.

In einer bekannten Absaugvorrichtung der eingangs genannten Art ist die Mikrotiterplattenvorlage zwischen zwei aufklappbaren und gegeneinander abgedichteten Hälften eines Basisteiles gehalten, wobei die Membranmikrotiterplatte randseitig abgedichtet und in Ausrichtung zur Vorlage gegen die obere Hälfte drückbar ist. Mittels einer externen Vakuumpumpe kann eine Kammer innerhalb des Basisteiles evakuiert und die Testlösung durch die Membran in die Vorlage gesaugt werden. Die Handhabung dieser Vorrichtung ist jedoch aufwendig, insbesondere weil für einen Austausch der Vorlage die Membranmikrotiterplatte demontiert und zwischengelagert werden muß, um die Mikrotiterplattenvorlage handhaben zu können, wodurch die Gefahr von Kontaminationen besteht. Bei umfangreichen Tests ist dies besonders nachteilig.

Davon ausgehend liegt der Erfindung die Aufgabe zugrunde, eine verbesserte Absaugvorrichtung für Mikrotiterplatten zu schaffen, die günstigere Handhabungseigenschaften bei geminderter Kontaminationsgefahr hat.

Zur Lösung dieser Aufgabe ist erfindungsgemäß bei der eingangs genannten Absaugvorrichtung die Abstützung der Mikrotiterplattenvorlage an einem eine Frontplatte aufweisenden Träger angeordnet, der bis zu einer Befüllposition in die Kammer verlagerbar ist, in welcher Befüllposition die Mikrotiterplattenvorlage unterhalb der Membranmikrotiterplatte angeordnet ist und der Träger mit seiner Frontplatte dichtend am Rand einer seitlichen Beschickungsöffnung der Kammer anliegt, und der aus der Kammer in eine Zugriffsposition für ein Einsetzen und Entnehmen der Mikrotiterplattenvorlage verlagerbar ist.

Bei einer erfindungsgemäßen Vorrichtung ist also die Mikrotiterplattenvorlage einfach mittels des Trägers in die Absaugvorrichtung einsetzbar bzw. aus dieser entnehmbar. Dabei kommt es zu keiner Lageänderung der horizontalen Dichtfläche für die Membranmikrotiterplatte, so daß diese bei einem Austausch der Vorlage auf der Vorrichtung verbleiben kann. Dabei versteht sich, daß die Membranmikrotiterplatte sowie die Mikrotiterplattenvorlage durch ihre jeweiligen Abstützungen in Befüllposition korrekt aufeinander ausgerichtet sind. Die Vorrichtung zeichnet sich durch günstige Handhabungseigenschaften aus, wobei die Gefahr von Kontaminationen erheblich verringert ist. Sie eignet sich besonders für die Integration in einem automatisierten Testablauf.

Gemäß einer Ausgestaltung der Erfindung hat die Absaugvorrichtung mehrere Öffnungen für mehrere Membranmikrotiterplatten und zugeordnete individuell evakuierbare Kammern für mehrere Mikrotiterplattenvorlagen, wodurch die Wirtschaftlichkeit einer Vorrichtung auch mit nur einer Vakuumpumpe, z.B. unter Verwendung von schaltbaren Ventilen, gesteigert werden kann.

Der Unterdruck in der evakuierbaren Kammer kann etwa 0,5 bar betragen. Gemäß einer bevorzugten Weiterbildung ist die Dichtfläche an einem Dichtmaterial mit emporragendem Führungsschenkel für die Membranmikrotiterplatte ausgebildet. Hierdurch wird zugleich eine hervorragende Abdichtung und seitliche Führung der Membranmikrotiterplatte für deren Ausrichtung auf die Mikrotiterplattenvorlage erreicht.

Eine weitere Ausgestaltung sieht vor, daß eine Andrückplatte aus einer Freigabestellung für das Aufsetzen oder Abnehmen der Membranmikrotiterplatte in eine Andrückstellung von oben gegen die Membranmikrotiterplatte schwenkbar ist. Die Andrückplatte kann insbesondere durch ihr Eigengewicht gegen die Membranmikrotiterplatte drücken und deren Sitz sowie Abdichtung auf der Dichtfläche verbessern. Eine Fortbildung sieht vor, daß die Andrückplatte mit einem Schalter für eine Betätigung einer mit der evakuierbaren Kammer verbundenen Vakuumpumpe in Andrückstellung gekoppelt ist. Hierdurch wird der Bedienungsaufwand verringert und sichergestellt, daß die Vakuumpumpe erst bei korrektem Dichtsitz der Membranmikrotiterplatte anläuft.

Vorzugsweise ist der Träger parallel zur Membranmikrotiterplatte verlagerbar, so daß die Mikrotiterplattenvorlage unbehindert von oben auf den Träger gesetzt bzw. von diesem abgenommen werden kann.

Der Träger kann an einen Einschub angeordnet oder schwenk-, dreh- oder klappbar sein. Mit einem Einschub kann die Mikrotiterplattenvorlage z.B. senkrecht oder parallel zur Membranmikrotiterplatte verschoben werden. Eine z.B. parallel zur Membranmikrotiterplatte schwenk- oder drehbare Platte oder Teller kann die Schwenk- oder Drehachse im Frontplattenbereich haben. Ein drehbarer Teller, insbesondere mit einer Drehachse im Mittelbereich der Frontplatte, kann ein gleichzeitiges Entnehmen und Einsetzen verschiedener Mikrotiterplattenvorlagen bei einem Drehwinkel von z.B. 180° ermöglichen. Eine z.B. in einer Ebene senkrecht zur Membranmikrotiterplatte schwenkbare Klappe kann zugleich die Frontplatte bilden und ihre Schwenkachse unterhalb der evakuierbaren Kammer haben. Für eine horizontale Ausrichtung der Mikrotiterplattenvorlage während der gesamten Schwenkbewegung der Klappe kann diese eine in Abhängigkeit vom Schwenkwinkel aufstellbare Abstützung tragen.

Ferner kann die Abstützung an einem lösbar mit der Frontplatte verbundenen Boden als Träger angeordnet sein, der z.B. zu Reinigungszwecken gelöst werden kann.

Wenn dem Träger ein mit der Frontplatte verbundenes Führungselement, Schwenkelement oder Drehelement zugeordnet ist, dessen Führung, Schwenklager oder Drehlager außerhalb der Kammer angeordnet ist, ist die Gefahr von Kontaminationen innerhalb der evakuierbaren Kammer mangels aneinander geführter Teile verringert. Bevorzugt ist dann das Führungselement, Schwenkelement oder Drehelement mit einem Frontplattenträger verbunden und besteht zwischen Frontplattenträger und Frontplatte eine Federverbindung mit einem Federweg in Führungsrichtung, Schwenkrichtung oder Drehrichtung wodurch eine abdichtende Anlage der Frontplatte am Rand der Beschickungsöffnung begünstigt wird.

Vorteilhafterweise kann die Frontplatte ein Dichtmaterial tragen, das unter elastischer Vorspannung am Rand der Beschickungsöffnung anliegt. Wie bei dem Dichtmaterial um die Öffnung kann es sich dabei um einen Silikonwerkstoff handeln.

Damit die Testlösung trotz geringfügiger, aufstellungsbedingter Neigung der Vorrichtung sicher aus den Aufnahmen der Membranmikrotiterplatte in die zugeordneten Aufnahmen einer Mikrotiterplattenvorlage gelangt, sind Platte und Vorlage bevorzugt nahe untereinander anzuordnen. Andererseits kann eine großvolumige Vorlage in Schalenform nützlich sein, wenn die abgetropfte Flüssigkeit lediglich gesammelt und nicht weiter untersucht werden muß. Dafür kann gemäß einer bevorzugten Ausgestaltung eine in die Öffnung einsetzbare Schale auf dem Träger angeordnet sein, die oben einen nach außen abgewinkelten und die Abstützung bildenden Rand hat, der die Öffnung bei darin eingesetzter Schale randseitig übergreift. Wenn die Schale auf dem Träger angeordnet ist, kann sie sowohl als großvolumige Vorlage für mehrere Membranmikrotiterplatten, als auch als Abstützung für eine kleinvolumige Mikrotiterplattenvorlage bei Vakuumabzug dienen. In die Öffnung eingehängt kann die Schale auch für einen vakuumfreien Abzug lediglich aufgrund der Schwerkraft dienen.

Gemäß einer anderen Ausführung ist der Träger in Befüllposition verriegelbar, wodurch er abdichtend am Rand der Beschickungsöffnung gesichert werden kann. Hierzu kann ihm ein zweiarmiger Verriegelungshebel zugeordnet sein, dessen Betätigungsarm die Frontplatte oder den Frontplattenträger durchgreift und dessen Verriegelungsarm in Verriegelungsstellung einen Verriegelungsbolzen hintergreift. Es versteht sich, daß der Verriegelungsbolzen fest mit der evakuierbaren Kammer verbunden ist, so daß durch Verriegelung eine diesbezügliche Sicherung des Trägers erfolgt.

Das Verlagern des Trägers in Zugriffsposition wird erleichtert, wenn dieser beim Verlagern in die Befüllposition eine Ausdrückfeder vorspannt, die ihn nach Entriegelung selbsttätig zurückdrückt.

Bei einer besonders komfortablen Ausgestaltung ist der Träger mit einer in Verlagerungsrichtung weisenden, vorzugsweise am Führungselement ausgebildeten Zahnstange verbunden, mit der ein Ritzel eines Einschubmotors kämmt. Der Einschubmotor kann den Träger in beiden Richtungen verlagern und begünstigt insbesondere eine Automatisierung.

Bevorzugt sind innerhalb eines gemeinsamen Gehäuses die evakuierbare Kammer und eine weitere Kammer angeordnet, die insbesondere die Vakuumpumpe, elektrische Steuer- und Versorgungseinrichtungen, die Führung, das Schwenklager oder Drehlager, Verriegelungseinrichtungen, eine Ausdrückfeder und/oder den Einschubmotor enthält. Alle oder eine Teilmenge dieser Komponenten sind in der weiteren Kammer von der evakuierbaren Kammer getrennt, wodurch die Kontaminationsgefahr gemindert wird und ein Kompaktgerät zur Verfügung gestellt werden kann, welches die für den Betrieb erforderlichen Komponenten enthält. Das Kompaktgerät ist besonders für eine Integration in einen automatisierten Testablauf geeignet.

Nach einer Ausgestaltung kann in der evakuierbaren Kammer ein Sterilfilter mit einer abdichtend durch eine Wand der Kammer geführten Verbindungsleitung zur Vakuumpumpe angeordnet sein. Das Sterilfilter verhindert, daß kontaminierte Abluft aus der evakuierbaren Kammer in andere Gerätebereiche gelangt und ausgestoßen wird. Schließlich sieht eine Ausgestaltung vor, daß die Absaugvorrichtung vorzugsweise als Saugfüße ausgebildete Gummifüße hat, welche den Abtropfvorgang störende Vibrationen mindern und eine selbsttätige Lageveränderung des Gerätes verhindern.

Weitere Einzelheiten und Vorteile des Gegenstandes der Erfindung ergeben sich aus der nachfolgenden Beschreibung der zugehörigen Zeichnungen, die eine bevorzugte Ausführungsform einer Vorrichtung mit Einschub zeigen. In den Zeichnungen zeigen:
- Fig. 1: die Vorrichtung mit in Zugriffsposition befindlichem Einschub im Längsschnitt;
- Fig. 2: dieselbe Vorrichtung mit in Befüllposition befindlichem Einschub in der Draufsicht;
- Fig. 3: dieselbe Vorrichtung in einem Schnitt entlang der Linie III-III der Fig. 2;
- Fig. 4: dieselbe Vorrichtung in Vorderansicht.

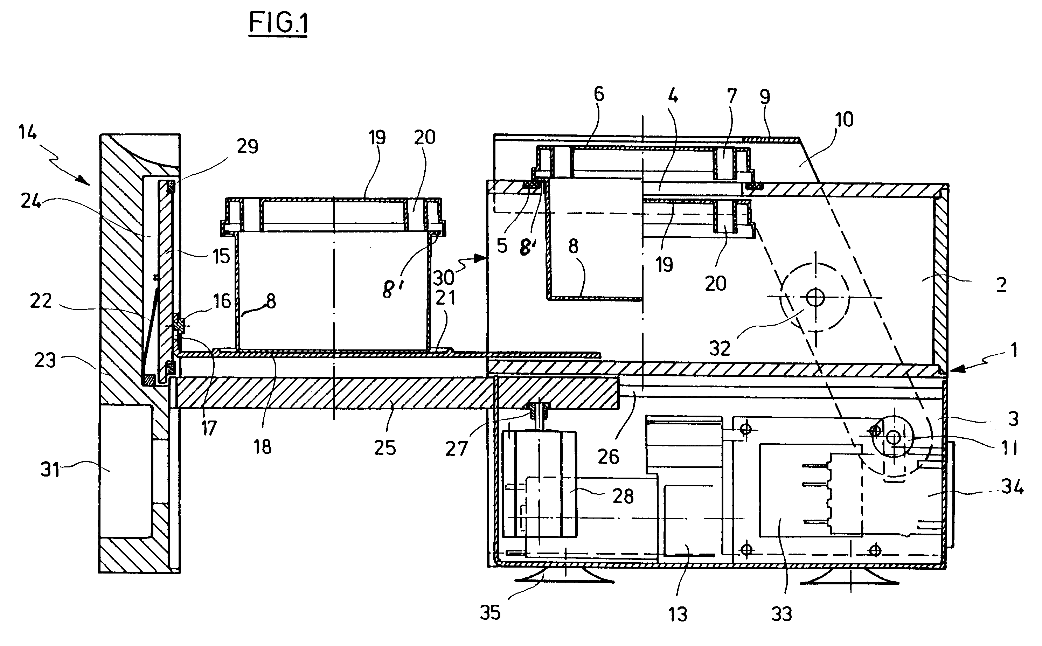

Die Absaugvorrichtung gemäß Fig. 1 bis 4 hat ein kastenförmiges Gehäuse 1 mit einer evakuierbaren Kammer 2 und einer weiteren Kammer 3 darunter. Die evakuierbare Kammer 2 hat oben eine etwa rechteckige Öffnung 4, die an der Außenseite des Gehäuses 1 von einem in einer Nut umlaufenden Dichtmaterial 5 umgeben ist.

Das Dichtmaterial 5 stützt den Rand einer genormten Membranmikrotiterplatte 6 nach unten und mit dem emporragenden Schenkel seines L-Profiles zur Seite hin ab. Aus Gründen der Vereinfachung sind nur zwei Aufnahmen 7 für Flüssigkeitsproben der Membranmikrotiterplatte 6 eingezeichnet. Fig. 1 zeigt außerdem in der linken Hälfte der Öffnung 4 die Hälfte einer eingesetzten Schale 8, die die Öffnungen randseitig mit einem nach außen abgewinkelten Rand 8' übergreift. In diese Schale tropft Flüssigkeit ohne Vakuumunterstützung ab.

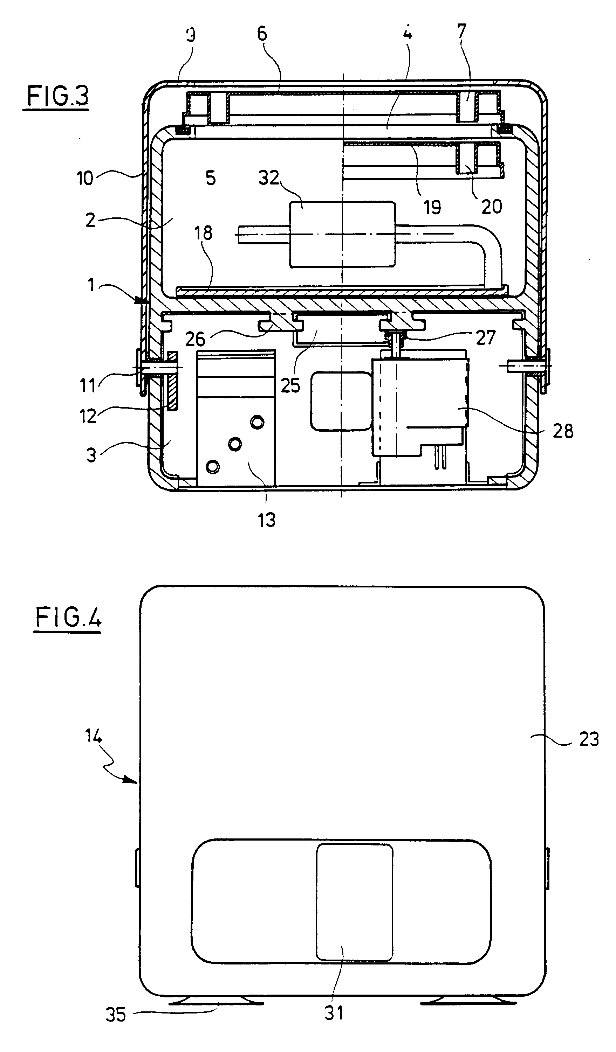

Oberhalb der Membranmikrotiterplatte 6 ist eine Andrückplatte 9 angeordnet, die den Oberrand der Membranmikrotiterplatte maskenartig übergreift und gegen diese mittels seitlich am Gehäuse 1 im Bereich der weiteren Kammer 3 gelagerter Schwenkarme 10 schwenkbar ist. In der weiteren Kammer 3 ist ein Schwenkbolzen 11 des Schwenkarms 10 mit einem Betätigungshebel 12 für eine ebenfalls in der weiteren Kammer befindliche Vakuumpumpe 13 verbunden (Fig. 3).

Ein Einschub 14 weist eine Frontplatte 15 sowie einen damit über Kopfbolzen 16 sowie korrespondierenden Einhängschlitzen 17 lösbar verbundenen Boden 18 auf. Der Boden 18 trägt gemäß Fig. 1 eine Schale 8, die der in die Öffnung 4 eingehängten entspricht und deren Rand 8' die Abstützung einer Mikrotiterplattenvorlage 19 bildet. Zur Vereinfachung sind auch bei der Mikrotiterplattenvorlage 19 nur zwei Aufnahmen 20 eingezeichnet. Bei herausgeschobenem Einschub 14 ist die Mikrotiterplattenvorlage leicht von oben entnehmbar (Zugriffsposition). Unter der rechten Hälfte der Öffnung 4 der Fig. 1 und 3 ist erkennbar, daß die Mikrotiterplattenvorlage 19 mittels des Einschubes 14 unter die Membranmikrotiterplatte 6 schiebbar ist, wobei die Aufnahmen 20 auf die Aufnahmen 7 ausgerichtet sind (Befüllposition). Um die korrekte Ausrichtung sicherzustellen, ist der Boden 18 mit emporragenden Führungsstegen 21 für die Schale 8 versehen.

Die Frontplatte 15 des Einschubes 14 ist mittels einer Biegefeder 22 an einem Frontplattenträger 23 gelagert und in einer Aufnahme 24 des Frontplattenträgers angeordnet.

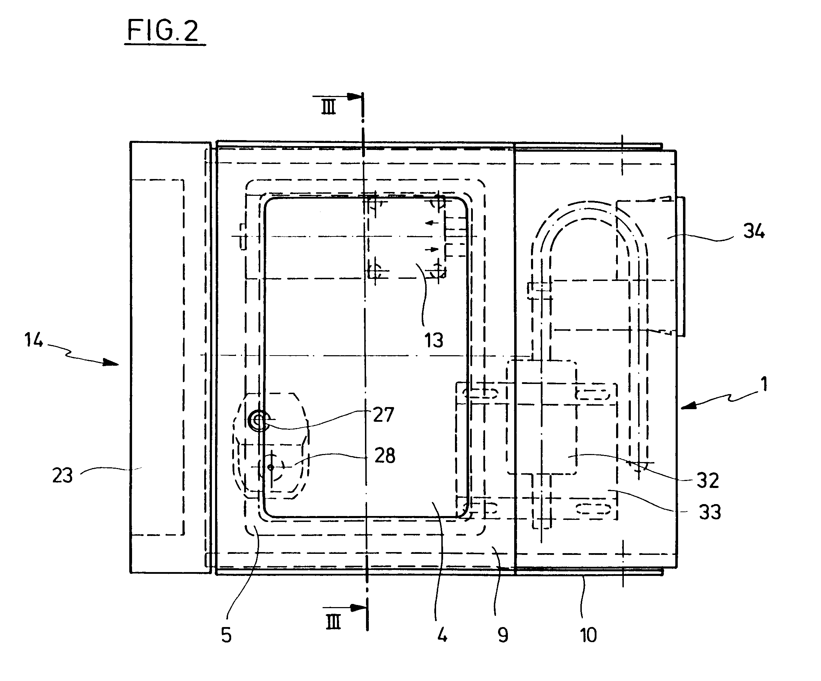

Der Frontplattenträger 23 ist wiederum fest mit einem schienenförmigen, linearen Führungselement 25 verbunden, welches sich in Verschieberichtung des Einschubes 14 parallel zur Membranmikrotiterplatte 6 erstreckt. Das Führungselement 25 ist beidseitig an T-förmigen Führungen 26 an der Decke der weiteren Kammer 3 geführt und seitlich mit einem Zahnstangenprofil versehen, welches mit einem Ritzel 27 eines innerhalb der weiteren Kammer 3 angeordneten Einschubmotors 28 kämmt. Mittels des Einschubmotors 28 ist der Einschub 14 aus der in Fig. 1 dargestellten Zugriffsposition in die Befüllposition gemaß Fig. 2 fahrbar, in der ein auf der Innenseite der Frontplatte angeordnetes Dichtmaterial 29 dichtend am Rand einer Beschickungsöffnung 30 der evakuierbaren Kammer 2 anliegt (Fig. 1). In Befüllposition kann der Einschub 14 mittels eines - nicht dargestellten - Verriegelungshebels verriegelbar sein, welcher eine Aussparung 31 des Frontplattenträgers 23 durchgreift. Bei der abgebildeten Version kann jedoch auch eine Verriegelung durch Blockieren des Einschubmotors 28 erfolgen.

Die Vakuumpumpe 13 saugt über ein in der Kammer 2 angeordnetes Sterilfilter 32 an und wird elektrisch über einen Transformator 33 innerhalb der weiteren Kammer 3 versorgt, die außerdem eine elektrische Anschlußbuchse 34 auch zur Speisung der Einschubmotors 28 aufweist. Ferner kann eine Schnittstelle für eine externe Steuerung vorgesehen sein.

Unten hat die Vorrichtung Saugfüße 35 aus Gummi, die insbesondere Vibrationen des Einschubmotors 28 sowie des Antriebs der Vakuumpumpe 13 dämpfen und eine selbsttätige Lageveränderung verhindern.

## Patentansprüche

1. Absaugvorrichtung für Membranmikrotiterplatten, mit einer evakuierbaren Kammer (2), die oben eine Öffnung (4) mit etwa horizontal umlaufender Dichtfläche (5) für ein randseitiges Abstützen einer von oben aufsetzbaren Membranmikrotiterplatte (6) hat und zusätzlich für das Einsetzen und Entnehmen einer Mikrotiterplattenvorlage (19) geöffnet werden kann, sowie mit einer Abstützung (8') für ein Positionieren der Mikrotiterplattenvorlage in der Kammer unterhalb der Membranmikrotiterplatte und parallel dazu, dadurch gekennzeichnet, daß die Abstützung (8') der Mikrotiterplattenvorlage (19) an einem eine Frontplatte (15) aufweisenden Träger (18) angeordnet ist, der bis zu einer Befüllposition in die Kammer (2) verlagerbar ist, in welcher Befüllposition die Mikrotiterplattenvorlage (19) unterhalb der Membranmikrotiterplatte (6) angeordnet ist und der Träger (18) mit seiner Frontplatte (15) dichtend am Rand einer seitlichen Beschickungsöffnung (30) der Kammer anliegt, und der aus der Kammer (2) in eine Zugriffsposition für ein Einsetzen und Entnehmen der Mikrotiterplattenvorlage (19) verlagerbar ist.

2. Absaugvorrichtung nach Anspruch 1, dadurch gekennzeichnet, daß sie mehrere Öffnungen (4) für mehrere Membranmikrotiterplatten (6) und zugeordnete evakuierbare Kammern (2) für mehrere Mikrotiterplattenvorlagen (19) hat.

3. Absaugvorrichtung nach Anspruch 2, dadurch gekennzeichnet, daß die mehreren evakuierbaren Kammern (2) durch Ventilumschaltung mit einer Vakuumpumpe (13) verbindbar sind.

4. Absaugvorrichtung nach einem der Ansprüche 1 bis 3, dadurch gekennzeichnet, daß die Dichtfläche an einem Dichtmaterial (5) mit emporragendem Führungsschenkel für die Membranmikrotiterplatte (6) ausgebildet ist.

5. Absaugvorrichtung nach einem der Ansprüche 1 bis 4, dadurch gekennzeichnet, daß eine Andrückplatte (9) aus einer Freigabestellung für das Aufsetzen oder Abnehmen der Membranmikrotiterplatte (6) in eine Andrückstellung von oben gegen die Membranmikrotiterplatte schwenkbar ist.

6. Absaugvorrichtung nach Anspruch 5, dadurch gekennzeichnet, daß die Andrückplatte (9) mit einem Schalter für eine Betätigung der mit der evakuierbaren Kammer (2) verbundenen Vakuumpumpe (13) in Andrückstellung gekoppelt ist.

7. Absaugvorrichtung nach einem der Ansprüche 1 bis 5, dadurch gekennzeichnet, daß der Träger (18) parallel zur Membranmikrotiterplatte (6) verlagerbar ist.

8. Absaugvorrichtung nach einem der Ansprüche 1 bis 7, dadurch gekennzeichnet, daß der Träger (18) an einem Einschub (14), einer in einer zur Membranmikrotiterplatte (6) parallelen Ebene schwenk- oder drehbaren Platte oder Teller, oder einer in einer Ebene senkrecht zur Membranmikrotiterplatte (6) schwenkbaren Klappe ausgebildet ist.

9. Absaugvorrichtung nach einem der Ansprüche 1 bis 8, dadurch gekennzeichnet, daß die Abstützung (8') an einem lösbar mit der Frontplatte (15) verbundenen Boden (18) als Träger angeordnet ist.

10. Absaugvorrichtung nach einem der Ansprüche 1 bis 9, dadurch gekennzeichnet, daß dem Träger (18) ein mit der Frontplatte (15) verbundenes Führungselement (25), Schwenkelement oder Drehelement zugeordnet ist, dessen Führung (26), Schwenklager oder Drehlager außerhalb der Kammer (2) angeordnet ist.

11. Absaugvorrichtung nach Anspruch 10, dadurch gekennzeichnet, daß das Führungselement (25), Schwenkelement oder Drehelement mit einem Frontplattenträger (23) verbunden ist und zwischen Frontplattenträger und Frontplatte (15) eine Federverbindung (22) mit einem Federweg in Führungsrichtung, Schwenk- oder Drehrichtung besteht.

12. Absaugvorrichtung nach einem der Ansprüche 1 bis 11, dadurch gekennzeichnet, daß die Frontplatte (15) ein Dichtmaterial (29) trägt.

13. Absaugvorrichtung nach einem der Ansprüche 1 bis 12, dadurch gekennzeichnet, daß eine in die Öffnung (4) einsetzbare Schale (8) auf dem Träger (18) angeordnet ist, die oben einen nach außen abgewinkelten und die Abstützung bildenden Rand (8') hat, der die Öffnung (4) bei darin eingesetzter Schale (8) randseitig übergreift.

14. Absaugvorrichtung nach einem der Ansprüche 1 bis 13, dadurch gekennzeichnet, daß der Träger (18) in Befüllposition verriegelbar ist.

15. Absaugvorrichtung nach Anspruch 14, dadurch gekennzeichnet, daß dem Träger (18) ein zweiarmiger Verriegelungshebel zugeordnet ist, dessen Betätigungsarm die Frontplatte oder den Frontplattenträger (23) durchgreift und dessen Verriegelungsarm in Verriegelungsstellung einen Verriegelungsbolzen hintergreift.

16. Absaugvorrichtung nach Anspruch 12 oder 13, dadurch gekennzeichnet, daß der Träger beim Verlagern in die Befüllposition eine Ausdrückfeder vorspannt.

17. Absaugvorrichtung nach einem der Ansprüche 1 bis 14, dadurch gekennzeichnet, daß der als Einschub ausgebildete Träger (18) mit einer in Verlagerungsrichtung weisenden Zahnstange (25) verbunden ist, mit der ein Ritzel (27) eines Einschubmotors (28) kämmt.

18. Absaugvorrichtung nach einem der Ansprüche 1 bis 17, dadurch gekennzeichnet, daß innerhalb eines gemeinsamen Gehäuses (1) die evakuierbare Kammer (2) und eine weitere Kammer (3) angeordnet sind, die insbesondere die Vakuumpumpe (13), elektrische Steuer- und Versorgungseinrichtungen (34, 33), die Führung (26), das Schwenklager oder Drehlager, Verriegelungseinrichtungen, eine Ausdrückfeder und/oder den Einschubmotor (28) enthält.

19. Absaugvorrichtung nach einem der Ansprüche 1 bis 18, dadurch gekennzeichnet, daß in der evakuierbaren Kammer (2) ein Sterilfilter (32) mit einer abdichtend durch eine Wand der Kammer (2) geführten Verbindungsleitung zur Vakuumpumpe (13) angeordnet ist.

20. Absaugvorrichtung nach einem der Ansprüche 1 bis 17, dadurch gekennzeichnet, daß sie vorzugsweise als Saugfüße (35) ausgebildete Gummifüße hat.

## Claims

1. A suction device for micro titration diaphragm plates, comprising an evacuation chamber (2) having an upper aperture (4) including a substantially horizontally arranged peripheral gasket means (5) for supporting a rim of said micro titration diaphragm plate (6) which is placed thereon from above and which chamber may be additionally opened for loading and unloading a micro titration recipient plate (19), further comprising a support means (8') for positioning said micro titration recipient plate within the chamber below said micro titration diaphragm plate in parallel relationship thereto, characterized in that said support means (8') of the micro titration recipient plate (19) is provided on a carrier (18) including a front plate (15) which carrier may be displaced to a loading position in said chamber (2), in which loading position the micro titration recipient plate (19) is disposed below said micro titration diaphragm plate (6), that said carrier (18) including its front plate (15) sealingly engages an edge of a side access opening (30) of said chamber, and that said carrier may be displaced out of said chamber (2) to an access position for loading and removing said micro titration recipient plate (19).

2. The suction device of claim 1, characterized in that it comprises a plurality of apertures (4) for a plurality of micro titration diaphragm plates (6) and a plurality of evacuation chambers (2) associated thereto for a plurality of micro titration recipient plates (19).

3. The suction device of claim 2, characterized in that said plurality of evacuation chambers (2) may be connected to a vacuum pump (13) by switching a valve means.

4. The suction device of one of claims 1 to 3, characterized in that said gasket means (5) is defined by a sealing material having an upstanding leg portion for engagement with said micro titration diaphragm plate.

5. The suction device of one of claims 1 to 4, characterized in that a biassing plate (9) may be pivoted between a release position allowing to load or to remove said micro titration diaphragm plate (6) and a biassing position engaging said micro titration diaphragm plate from above.

6. The suction device of claim 5, characterized in that the biassing plate (9) is coupled at its biassing position to a switch energizing the vacuum pump (13) which is connected to said evacuation chamber (2).

7. The suction device of one of claims 1 to 5, characterized in that said carrier (18) is moved in a direction parallel to said micro titration diaphragm plate (6).

8. The suction device of one of claims 1 to 7, characterized in that said carrier (18) is provided on a drawer (14) or on a plate or table which can be rotated in a plane parallel to said micro titration diaphragm plate (6) or is provided on a flap which can be pivoted in a plane perpendicular to said micro titration diaphragm plate (6).

9. The suction device of one of claims 1 to 8, characterized in that said support means (8') is provided on a bottom member (18) defining said carrier and being releasably connected to said front plate (15).

10. The suction device of one of claims 1 to 9, characterized in that a guide element (25), a pivoting element or rotating element mounted to said front plate (15) is associated to said carrier (18), a guide means (26), a pivoting or rotating support thereof being provided outside of said chamber (2).

11. The suction device of claim 10, characterized in that said guide element (15), pivoting or rotating element is mounted to the front plate carrier (23) and that a resilient mounting (22) is provided between said front plate carrier and said front plate (15) to provide a spring controlled displacement in the direction of the guiding, pivoting or rotating movement.

12. The suction device of one of claims 1 to 11, characterized in that said front plate (15) includes a gasket means (29).

13. The suction device of one of claims 1 to 12, characterized in that a pan (8) to be placed into said aperture (4) is arranged on said carrier (18), said pan including an upper flange (8') which is outwardly angled and defines said support which flange extends over the edge of said aperture (4) when said pan (8) is inserted therein.

14. The suction device of one of claims 1 to 13, characterized in that said carrier (18) may be locked in the loading position.

15. The suction device of claim 14, characterized in that said carrier (18) comprises a locking lever having two arms, the actuating arm thereof extending through said front plate or said front plate carrier (23) and a locking arm thereof engaging a locking pin when being in the locking position.

16. The suction device of claim 12 or 13, characterized in that said carrier biasses a return spring when being moved into the loading position.

17. The suction device of one of claims 1 to 14, characterized in that said carrier (18) defining said drawer is connected to a toothed rack (25) extending in the direction of the displacement, said rack meshing with a pinion (27) of a displacement motor (28).

18. The suction device of one of claims 1 to 17, characterized in that an evacuation chamber (2) and a further chamber (3) are provided within a common housing (1), said further chamber particularly accommodating said vacuum pump (13), electrical control and supply means (34, 33), said guide means (26), said pivoting or rotating support, locking means, a return spring and/or said displacement motor (28).

19. The suction device of one of claims 1 to 18, characterized in that a sterilized filter (32) is disposed in said evacuation chamber (2), said filter being connected to said vacuum pump (13) through a connecting line sealingly extending through a wall of said chamber (2).

20. The suction device of one of claims 1 to 17, characterized in that rubber feet preferrably comprising suction cups (35) are provided.

## Revendications

1. Dispositif d'aspiration pour plaques de microtitrage à membrane, comportant une chambre (2), dans laquelle on peut faire le vide, qui présente en haut une ouverture (4) avec une surface d'étanchéité (5) qui l'entoure horizontalement, destinée à soutenir par ses bords une plaque (6) de microtitrage à membrane et qui peut en outre être ouvert pour l'introduction et le retrait d'un présentoir (19) à plaques de microtitrage, et comportant également un appui (8') pour la mise en place de présentoir de plaques de microtitrage dans la chambre sous la plaque de microtitrage à membrane et, parallèlement à cette plaque,
caractérisé en ce que l'appui (8') du présentoir de plaques de microtitrage (19) est disposé sur un support (18) présentant une plaque avant (15), ledit support pouvant être déplacé jusqu'à une position de remplissage située dans la chambre (2), position de remplissage dans laquelle le présentoir (19) de plaques de microtitrage est disposé sous la plaque (6) de microtitrage à membrane et le support (18), est en appui de façon étanche, par sa plaque avant (15), sur le bord d'une ouverture (30) latérale de chargement de la chambre, et pouvant être sorti de la chambre (2) jusque dans une position d'accès pour permettre d'introduire des plaques de microtitrage dans le présentoir (19) et de les retirer.

2. Dispositif d'aspiration suivant la revendication 1, caractérisé en ce qu'il comporte plusieurs ouvertures (4) pour plusieurs plaques (6) de microtitrage à membrane et des chambres (2) associées, dans lesquelles on peut faire le vide, pour plusieurs présentoirs de plaques de microtitrage (19).

3. Dispositif d'aspiration suivant la revendication 2, caractérisé en ce que les plusieurs chambres (2) dans lesquelles on peut faire le vide peuvent être raccordées par commutation d'une valve, à une pompe à vide (13).

4. Dispositif d'aspiration suivant l'une des revendications 1 à 3, caractérisé en ce que la surface d'étanchéité est réalisée dans un materiau étanche (5), avec un côté de guidage faisant saillie pour la plaque (6) de microtitrage.

5. Dispositif d'aspiration suivant l'une des revendication 1 à 4, caractérisé en ce qu'une plaque de pressage (9) peut pivoter d'une position de libération pour la mise en place ou l'enlèvement de la plaque (6) de microtitrage à membrane, à une position de pression de haut en bas contre la plaque de microtitrage à membrane.

6. Dispositif d'aspiration suivant la revendication 5, caractérisé en ce que la plaque de pression (9) est couplée en position de pression à un interrupteur permettant un actionnement de la pompe à vide (13) reliée à la chambre (2) dans laquelle on peut faire le vide.

7. Dispositif d'aspiration suivant l'une des revendications 1 à 5, caractérisé en ce que le support (18) peur être déplacé parallèlement à la plaque (6) de microtitrage à membrane.

8. Dispositif d'aspiration suivant l'une des revendications 1 à 7, caractérisé en ce que le support (18) est réalisé sur un tiroir insérable (14), sur une plaque ou un plateau pouvant tourner au pivoter dans un plan parallèle à la plaque (6) de microtitrage à membrane, ou sur un volet pouvant pivoter dans un plan perpendiculaire à la plaque (6) de microtitrage à membrane.

9. Dispositif d'aspiration suivant l'une des revendications 1 à 8, caractérisé en ce que l'appui (8') est disposé sur un fond (18) relié de façon amovible à la plaque avant (15), ce fond formant le support.

10. Dispositif d'aspiration suivant l'une des revendications 1 à 9, caractérisé en ce qu'au support (18) est associé un élément de guidage (25) relié à la plaque avant (15), à un élément pivotant ou à un élément rotatif, dont la glissière (26), le palier de pivotement ou le palier de rotation, est disposée en dehors de la chambre (2).

11. Dispositif d'aspiration suivant la revendication 10, caractérisé en ce l'élément de guidage (25), l'élément pivotant ou l'élément rotatif est relié à un support (23) de plaque avant, et en ce qu'une liaison à ressort (22) permettant un déplacement dans la direction de guidage, de pivotement ou de rotation est prévue entre le support de plaque avant et la plaque avant (15).

12. Dispositif d'aspiration suivant l'une des revendications 1 à 11, caractérisé en ce que la plaque avant (15) porte un matériau d'étanchéité (29).

13. Dispositif d'aspiration suivant l'une des revendications 1 à 12, caractérisé en ce qu'une cuvette (8) pouvant être introduite dans l'ouverture (4) est disposée sur le support (18), ladite cuvette présentant un bord (8') replié vers l'extérieur et constituant l'appui, qui recouvre le bord de l'ouverture (4) lorsque la cuvette (8) est introduite.

14. Dispositif d'aspiration suivant l'une des revendications 1 à 13, caractérisé en ce que le support (18) peut être verrouillé en position de remplissage.

15. Dispositif d'aspiration suivant la revendication 14, caractérisé en ce qu'un levier de verrouillage à deux branches est associé au support (18), levier dont la branche d'actionnement traverse la plaque avant ou le support (23) de plaque avant et dont la branche de verrouillage est en prise arrière avec un boulon de verrouillage en position de verrouillage.

16. Dispositif d'aspiration suivant la revendication 12 ou 13, caractérisé en ce que le support, lorsqu'il est déplacé vers la position de remplissage, pré-tend un ressort de pression.

17. Dispositif d'aspiration suivant l'une des revendications 1 à 14, caractérisé en ce que le support (18) réalisé sous forme de tiroir insérable est relié à une crémaillère (25) orientée dans le sens du déplacement, avec laquelle engrène un pignon (27) d'un moteur d'insertion (28).

18. Dispositif d'aspiration suivant l'une des revendications 1 à 17, caractérisé en ce que la chambre (2) dans laquelle on peut faire le vide et une autre chambre (3) sont disposées à l'intérieur d'un boîtier (1) commun, ladite autre chambre (3) comprenant en particulier la pompe à vide (13), des dispositifs de commande et d'alimentation (34, 33) électriques, la glissière (26), le palier de pivotement ou le palier de rotation, des dispositifs de verrouillage, un ressort de pression et/ou le moteur d'insertion (28).

19. Dispositif d'aspiration suivant l'une des revendications 1 à 18, caractérisé en ce qu'un filtre stérile (32) comportant une conduite de connexion traversant de façon étanche la paroi de la chambre (2) et menant à la pompe à vide (13) est disposée dans la chambre (2) dans laquelle on peut faire le vide.

20. Dispositif d'aspiration suivant l'une des revendications 1 à 17, caractérisé en ce qu'il comporte de préférence des pieds en caoutchouc réalisés sous la forme de pieds à ventouse (35).
